# EUROPÄISCHE PATENTSCHRIFT

(11) **EP 1 190 188 B1**
(45) Veröffentlichungstag und Bekanntmachung des Hinweises auf die Patenterteilung: **04.12.2002**
(21) Anmeldenummer: 00951202.1
(22) Anmeldetag: 31.05.2000
(51) Int. Cl.: F16H 31/00, B60N 2/235, B60N 2/44

(54) **BEIDSEITIG WIRKENDER ANTRIEB FÜR VERSTELLVORRICHTUNGEN**
DRIVE ACTING ON BOTH SIDES FOR ADJUSTMENT DEVICES
ORGANE D'ENTRAINEMENT AGISSANT SUR DEUX COTES, DESTINE A DES DISPOSITIFS DE REGLAGE

(30) Priorität: 04.06.1999 DE 19927033
(43) Veröffentlichungstag der Anmeldung: 27.03.2002
(73) Patentinhaber: Brose Fahrzeugteile GmbH & Co. KG Coburg, 96450 Coburg (DE)
(72) Erfinder: SCHUMANN, Peter, D-96253 Untersiemau (DE); SCHECK, Georg, D-96497 Weitramsdorf (DE)
(74) Vertreter: Ninnemann, Detlef, Dipl.-Ing.
(86) Internationale Anmeldenummer: DE0001810
(87) Internationale Veröffentlichungsnummer: WO00075534

(56) Entgegenhaltungen:
- DE-A- 19 527 912
- DE-A- 19 540 631
- DE-A- 19 725 899

## Beschreibung

Die Erfindung betrifft einen beidseitig wirkenden Antrieb für Verstellvorrichtungen nach dem Oberbegriff des Anspruches 1. Die Erfindung ist insbesondere für die Verstellung von Fahrzeugsitzkomponenten wie Sitzlehnen und Sitzkissen vorgesehen.

Aus der DE 195 27 912 A1 ist ein beidseitig wirkender Antrieb bekannt, bei dem ein Antriebshebel auf einer Antriebsachse gelagert ist und schwenkbare Kupplungselemente trägt, deren mit Verzahnungselementen versehene freie Enden mit der auf dem Umfang eines Antriebsrades angeordneten Verzahnung in Eingriff bringbar sind. Den schwenkbaren Kupplungselementen ist eine Kulissenführung zugeordnet, die je nach Schwenkrichtung des Antriebshebels das jeweils unbelastete Kupplungselement von der Verzahnung des Antriebsrades abhebt. Dabei sind beidseitig und außerhalb der Kulissenführung Federbereiche vorgesehen, die auf die Kupplungselemente eine entgegen der Einrastrichtung der Verzahnung gerichtete Kraft ausüben, wodurch sogenannte Ratschengeräusche vermieden werden.

Nachteilig an dem aus der DE 195 27 912 A1 bekannten Verstellantrieb ist zum einen die relativ große Teilezahl. Insbesondere sind zwei unabhängige Kupplungselemente für eine beidseitige Verstellung erforderlich; damit verbunden ist ein entsprechend großer Bauraum des Verstellantriebes. Zum anderen ist eine aufwendige Konstruktion notwendig, um die Kupplungselemente definiert zu führen und dabei ein Ratschen der Verzahnung der Kupplungselemente an der Verzahnung des Antriebsrades beim Zurückführen des Antriebshebels in die Nullpunktlage zu vermeiden.

Aus der DE 197 25 899 A1 ist ein gattungsgemäßer, beidseitig wirkender Verstellantrieb bekannt, bei dem der Antriebshebel mit einem als ein einteiliges Kippelement ausgebildeten Verriegelungsmittel gekoppelt ist. Das Kippelement steht dabei mit einer am Umfang eines Antriebsrades angeordneten Verzahnung in Eingriff und ist zwischen zwei Endpositionen hin und her kippbar. Bei einer Rückstellbewegung des Antriebshebels in eine Ausgangsposition gerät das Kippelement außer Eingriff mit der Verzahnung des Antriebsrades, so daß dieses während der Rückstellbewegung nicht mitgenommen wird.

Ausgehend von diesem Stand der Technik liegt der Erfindung die Aufgabe zugrunde, einen beidseitig wirkenden Antrieb zur Erzeugung einer Drehbewegung zur Verfügung zu stellen, der mit einer geringen Anzahl von Einzelteilen auskommt, einfach zu montieren ist und sich durch einen kompakten Aufbau auszeichnet. Dabei soll der Antrieb bei seiner Handhabung quasi spielfrei wirken und keine Schalt- und Klappergeräusche von sich geben.

Diese Aufgabe wird erfindungsgemäß durch einen beidseitig wirkenden Antrieb mit den Merkmalen des Anspruchs 1 gelöst.

Die erfindungsgemäße Lösung sieht vor, daß das Kopplungselement in einer Führung sowohl radial verschiebbar als auch kippbar gelagert ist, wobei die beiden Kopplungsbereiche in der Nullpunktlage des Antriebshebels mit dem Antriebsrad federelastisch gekoppelt sind. Bei einer Bewegung des Antriebshebels aus der Nullpunktlage wird der unbelastete Kopplungsbereich durch die Kulissenführung von dem Antriebsrad entkoppelt und bleibt bei der entgegengesetzten Bewegung des Antriebshebels, also einer Bewegung in Richtung der Nullpunktlage, entkoppelt.

Obwohl ein Spiel wegen der einteiligen Ausbildung des Kopplungselements notwendig ist, erscheint der Antrieb subjektiv spielfrei, weil der tatsächliche Leerweg, der bis zur Drehung des Antriebsrades zurückgelegt werden muß, durch die federelastische Vorspannung belastet ist. Diese Vorspannung kann beispielsweise durch eine Schraubenfeder erzeugt werden, die sich einerseits radial am Antriebshebel und andererseits am Kopplungselement abstützt, wobei deren Kopplungsbereich in den zugeordneten Kopplungsbereich des Antriebsrades gedrückt wird. Beispielsweise drückt eine Schraubenfeder das Kopplungselement gegen das Antriebsrad, wodurch die Bewegung des Antriebshebels insgesamt als spielfrei empfunden wird. Darüber hinaus tritt bei der erfindungsgemäßen Lösung kein Einrastklacken auf, da das Kopplungselement schon durch die Anfederung in eine Mitnahmeposition gebracht wird und nicht erst durch das Aufbringen einer Antriebskraft.

Um eine sichere und exakte Führung des Kopplungselements in radialer Richtung zu gewährleisten, ist ein Führungselement vorgesehen, das mit dem Kopplungselement verbunden ist und das in eine Ausnehmung des Antriebshebels eingreift. Diese Ausnehmung erstreckt sich dabei in radialer Richtung und ist beispielsweise als ein Langloch ausgebildet.

In einer alternativen Ausgestaltung ist das Führungselement an dem Antriebshebel angeordnet und die radiale Ausnehmung, die als eine Art Kulisse wirkt, ist in dem Kopplungselement eingearbeitet. Das Führungselement kann in einem Montageprozeß, beispielsweise durch Schweißen, Nieten oder Schrauben mit dem Antriebshebel bzw. mit dem Kopplungselement verbunden werden oder durch Drücken oder Durchziehen ausgebildet werden. Die Ausnehmung wird üblicherweise ausgestanzt, ebenso ist die Ausbildung der Ausnehmung in einem Urformverfahren möglich.

Unter Umständen kann es günstig sein, zur Gewährleistung einer gleichmäßigen, möglichst ruckfreien Bewegung des Führungselements einen Gleitstein vorzusehen, der das Führungselement mit der radialen Ausnehmung verbindet. Über den Gleitstein kann unabhängig von dem Material des Führungselementes und des die Ausnehmung umgebenden Bauteils eine günstige Reibpaarung hergestellt werden.

Die Ausnehmung ist günstigerweise derart bemessen, daß bei einer maximalen Verlagerung des Kopplungselements in Richtung der Antriebsachse beide Kopplungsbereiche gerade nicht mit dem Antriebsrad gekoppelt sind. Dadurch wird erreicht, daß das Spiel des Verstellantriebes minimal wird.

Gemäß der Erfindung ist zwischen einem Gehäuse des Verstellantriebes und dem Kopplungselement eine Feder angeordnet, die das Kopplungselement radial in Richtung des Antriebsrades belastet, wodurch ein Anliegen der beiden Kopplungsbereiche in der Nullpunktlage des Antriebshebels an dem Antriebsrad gewährleistet ist.

In einer Ausgestaltung der Erfindung ist eine Feder zwischen dem Antriebshebel und dem Kopplungselement angeordnet, wobei es günstig ist, wenn die Feder zwischen dem Antriebshebel und einem Führungselement des Kopplungselements angeordnet ist.

Um einen definierten Eingriff der Kopplungsbereiche mit dem Antriebsrad zu gewährleisten ist es vorteilhaft, eine formschlüssige Verbindung zur Übertragung der durch den Antriebshebel aufgebrachten Kraft vorzusehen. Dazu sind sowohl die Kopplungsbereiche des Kopplungselements als auch der Umfang des Antriebsrades mit einer Verzahnung versehen, die einander korrespondierend zugeordnet sind, so daß die beiden Verzahnungsbereiche ineinander eingreifen können. Dabei kann die Verzahnung des Antriebsrades als Innen- oder Außenverzahnung ausgebildet sein.

Da die Herstellung von Verzahnungen, insbesondere von Innenverzahnungen aufwendig und teuer ist, ist alternativ zu einer formschlüssigen Verbindung der Kopplungsbereich mit dem Antriebsrad reibschlüssig gekoppelt. Die Kopplungsbereiche des Kopplungselements und der Umfang des Antriebsrades sind dabei entsprechend ausgebildet, beispielsweise durch eine Beschichtung mit einem Reibbelag, so daß die Übertragung eines erforderlichen Drehmoments zwischen dem Kopplungselement und dem Antriebsrad mittels Reibschluß erfolgt.

Die Kulissenführung zur Steuerung des Kopplungselements ist in einer Ausgestaltung der Erfindung in einem Abdeckelement des Antriebs ausgebildet.

In einer Ausgestaltung der Erfindung sind beidseitig außerhalb der Führungsbereiche der Kulisse federnde Elemente angeordnet, die bei der Bewegung des Antriebshebels in Richtung der Nullpunktlage eine Abhebebewegung desjenigen Kopplungsbereiches von dem Antriebsrad bewirken, der vorher belastet war. Die Federkraft ist dabei so ausgelegt, daß sie bei einer Bewegung des Antriebshebels aus der Nullpunktlage heraus ein Anliegen der Kopplungsbereiche an dem Antriebsrad zuläßt und gleichzeitig ein Abheben des Kopplungselements gewährleistet, wenn keine Kraft über den Antriebshebel zur Verstellung bspw. der Sitzlehne eingeleitet wird.

Dazu sind an dem Kopplungselement Führungselemente beispielsweise in Gestalt von Stiften angeordnet, die in der Kulissenführung geführt werden und die außerhalb der Kulissenführungsbereiche mit federnden Bereichen in Kontakt stehen, um eine Abhebebewegung des Kopplungselements bei Wegfall der Antriebskraft zu erreichen, so daß bei der Rückstellbewegung keine Ratschengeräusche auftreten. In einer Weiterbildung der Erfindung weisen die Führungselemente einen nicht abgerundeten Eckabschnitt auf, wodurch bei der Bewegung des Kopplungselements über die Nullpunktlage hinaus das Umkehrspiel minimiert wird.

Eine Weiterbildung der erfindungsgemäßen Lösung ist dadurch gekennzeichnet, dass auf das Kopplungselement eine solche Zusatzkraft bei einem Verstellvorgang einwirkt, daß bei einer Bewegung des Antriebshebels aus der Nullpunktlage heraus auf den belasteten Kopplungsbereich ein Drehmoment in Richtung auf das Antriebsrad und bei einer Bewegung des Antriebshebels in Richtung der Nullpunktlage ein Drehmoment in Richtung auf ein Abheben des belasteten Kopplungsbereichs von dem Antriebsrad entsteht.

Mit dieser Weiterbildung der erfindungsgemäßen Lösung wird ein kostengünstiger spielfreier Antrieb geschaffen, der einerseits eine feste Kopplung zwischen dem in der jeweiligen Verstellrichtung aktiven Kopplungsbereich des Kopplungselements und dem Antriebsrad bei einer Bewegung des Antriebshebels aus der Nullpunktlage heraus bewirkt und andererseits eine geräuschlose Rückstellung des Antriebshebels in die Nullpunktlage gewährleistet.

Eine vorteilhafte Ausgestaltung dieser Weiterbildung der erfindungsgemäßen Lösung für einen Antrieb mit als Verzahnungen ausgebildeten Kopplungsbereichen des Kopplungselements und einer den Verzahnungen zugeordneten Verzahnung am Umfang des Antriebsrades ist dadurch gekennzeichnet, daß bei einer Bewegung des Antriebshebels aus der Nullpunktlage heraus auf den belasteten Kopplungsbereich ein Drehmoment in Richtung auf einen Zahneingriff und bei einer Bewegung des Antriebshebels in Richtung der Nullpunktlage ein Drehmoment in Richtung einer Trennung des Zahneingriffs entsteht.

Bei dieser Ausgestaltung der Erfindung wird einerseits ein fester Zahneingriff zwischen den Verzahnungen des in der jeweiligen Verstellrichtung aktiven Kopplungsbereichs des Kopplungselements und des Antriebsrades bei einer Bewegung des Antriebshebels aus der Nullpunktlage heraus bewirkt und andererseits eine Rückstellung des Antriebshebels in die Nullpunktlage ohne Ratschengeräusche gewährleistet.

Vorzugsweise wird die auf das Kopplungselement einwirkende Zusatzkraft bei einem Verstellvorgang zur Erzeugung eines Drehmoments in Richtung auf eine verstärkte Kopplung des belasteten Kopplungsbereiches und des Antriebsrades bei einer Bewegung des Antriebshebels aus der Nullpunktlage heraus und eines Drehmoments in Richtung auf ein Abheben des belasteten Kopplungsbereichs von dem Antriebsrad bei einer Bewegung des Antriebshebels in Richtung der Nullpunktlage durch ein axiales Verspannen des Kopplungselements erzielt, vorzugsweise durch ein axiales Verspannen des Kopplungselements außerhalb der Nullpunktlage des Antriebshebels.

Diese Konstruktion gewährleistet zusätzlich zu einem quasi spielfreien Antrieb, einer festen Kopplung zwischen Kopplungselement und Antriebsrad sowie einer Vermeidung von Ratschengeräuschen, daß das Kopplungselement in der Nullpunktlage mit dem Antriebsrad durch die Wirkung der auf das Kopplungselement einwirkenden Feder gekoppelt ist und daß das Kopplungselement fixiert wird und somit keine Klappergeräusche auftreten können.

Die Herstellung des axialen Verspannens des Kopplungselements erfolgt vorzugsweise über mindestens ein axial wirkendes Reibelement, das unterhalb der Wirklinie des Drehpunkts des Kopplungselements mit der Verbindung der Kopplungsbereiche mit dem Antriebsrad am Kopplungselement angeordnet ist, sich an einem ortsfesten Teil des Antriebs abstützt und in der Nullpunktlage des Antriebshebels inaktiv ist, derart, daß die Kopplungsbereiche durch die federelastische Verbindung des Kopplungs- elements mit dem Antriebshebel mit dem Antriebsrad gekoppelt werden.

Wahlweise können zwei Reibelemente seitlich neben dem Antriebshebel auf dem Kopplungselement und/oder ein Reibelement mittig am Kopplungselement angeordnet werden, das durch eine Öffnung des Antriebshebels greift.

orzugsweise ist bzw. sind das bzw. die Reibelement(e) als Blattfeder ausgebildet.

Anhand von in der Zeichnung dargestellten Ausführungsbeispielen soll der der Erfindung zugrundeliegende Gedanke näher erläutert werden. Es zeigen:
- Fig. 1 -: eine Draufsicht auf einen Verstellantrieb mit einem an dem Antriebshebel gelagerten Kopplungselement;
- Fig. 2 -: einen Verstellantrieb mit einem außenverzahnten Antriebsrad;
- Fig. 3 -: einen Verstellantrieb in der Nullpunktlage mit einer an der Antriebsachse abgestützten Feder;
- Fig. 4 -: einen Verstellantrieb nach Fig. 3 in einer leicht gedrehten Stellung, wobei der nichtbelastete Kopplungsbereich gerade vom Antriebsrad abhebt;
- Fig. 5 -: einen Verstellantrieb nach Fig. 3 in Schnittdarstellung;
- Fig. 6 -: einen Verstellantrieb mit gehäusefesten Federn zur geräuschlose Rückstellung des Kopplungselements in die Nullpunktlage;
- Fig. 7 -: einen Verstellantrieb mit einer Feder zwischen dem Kopplungselement und dem am Antriebshebel angeordneten Führungselement;
- Fig. 8 -: einen Verstellantrieb mit seitlich des Antriebshebels auf dem Kopplungselement angeordneten Reibelementen und
- Fig. 9 -: einen Verstellantrieb mit einem mittig am Kopplungselement angeordneten, durch eine Öffnung im Antriebshebel greifenden Reibelement.

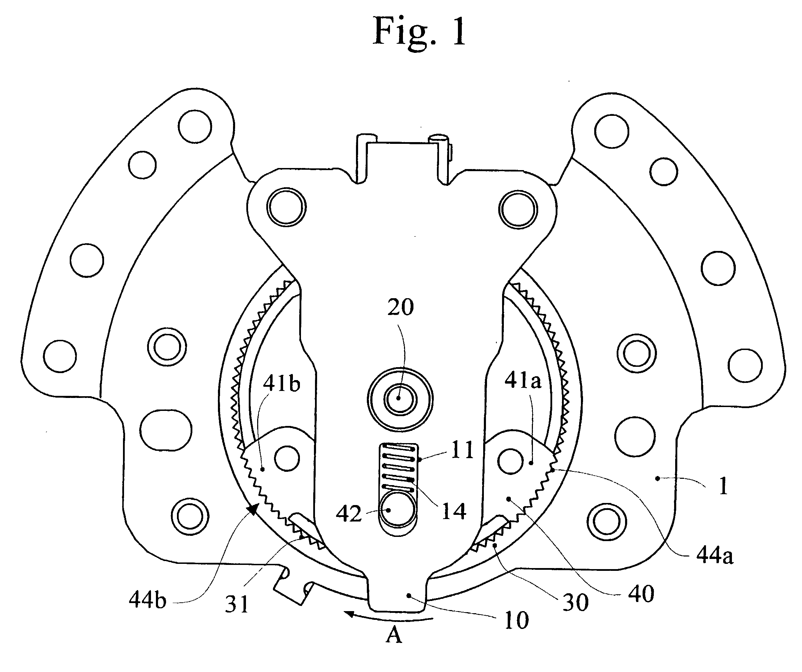

Figur 1 zeigt einen Verstellantrieb mit einem drehfesten Gehäuse 1, an dem ein Antriebshebel 10 bzw. ein mit dem Antriebshebel verbindbares Bauteil 10 auf einer Achse 20 drehbar gelagert ist. In dem Antriebshebel 10, der hier verkürzt dargestellt ist, ist eine Ausnehmung 11 ausgestanzt, in der ein durch eine Feder 14 radial belastetes Führungselement 42 geführt ist. Das Führungselement 42, das hier in Form eines Zylinderstiftes ausgebildet ist, ist an einem Kopplungselement 40 angeformt, das zwischen dem Gehäuse 1 und dem Antriebshebel 10 montiert ist.

Die Feder 14 drückt das Führungselement 42 von der Achse 20 radial nach außen, wodurch gleichzeitig das Kopplungselement 40 von der Achse 20 entfernt wird. In dem Ausführungsbeispiel ist die Feder als eine Druckfeder 14 ausgebildet, jedoch sind andere Federformen wie Blatt- oder Zugfedern sowie andere Federelemente wie Gummifedern grundsätzlich möglich.

Das radial verschiebliche Kopplungselement 40 weist zwei Kopplungsbereiche 41a und 41b auf, die als Verzahnung ausgebildet sind und die in eine entsprechende Innenverzahnung 31 eines Antriebsrades 30 eingreifen. Das Antriebsrad 30 befindet sich im wesentlichen in einer Ebene mit dem Kopplungselement 40 und ist drehfest mit einem nicht dargestellten Getriebeelement verbunden, das mit weiteren Getriebeelementen oder -stufen der Verstelleinrichtung in Wirkverbindung steht.

In der Darstellung der Figur 1 befindet sich der Antriebshebel 10 in seiner Nullpunktstellung und die Feder 14 drückt das Kopplungselement 40 radial nach außen, so daß beide Kopplungsbereiche 41a, 41b mit der Innenverzahnung 31 in den Verzahnungsabschnitten 44a, 44b formschlüssig in Eingriff stehen. Die radiale Beweglichkeit des Kopplungselements 40 wird dabei durch die Abmessungen der Ausnehmung 11 in dem Antriebshebel 10 nicht begrenzt, so daß in Richtung des Antriebsrades 30 ein vollständiger Eingriff der Verzahnungen möglich ist. In Richtung auf die Achse 20 ist die Ausnehmung 11 so dimensioniert, daß beim Anschlag des Führungselementes 42 die beiden Kopplungsbereiche 41a, 41b gerade außer Eingriff mit der Innenverzahnung 31 gebracht sind.

Bei einer Betätigung des Antriebshebels 10 in Richtung des Pfeiles A, wird über das Führungselement 42 eine in Richtung des Pfeiles A wirkende Kraft auf das Kopplungselement 40 ausgeübt. Diese Kraft wirkt auf den Kopplungsbereich 41b, der sich an dem entsprechenden Verzahnungsabschnitt 44b der Innenverzahnung 31 des Antriebsrades 30 abstützt und das Antriebsrad 30 um die Achse 20 dreht. Gleichzeitig wird über eine nicht dargestellte Kulissenführung der Kopplungsbereich 41a von der Innenverzahnung 31 abgehoben, wodurch das Führungselement 42 in der Ausnehmung 11 in Richtung der Achse 20 bewegt wird. Bei einer Rückstellung des Antriebshebels 10 in die Nullpunktlage gleitet der Kopplungsbereich 41b über die Innenverzahnung und der Kopplungsbereich 41a wird durch die entsprechende Kulissenführung außer Eingriff mit der Innenverzahnung 31 gehalten bis die in der Figur 1 dargestellte Ausgangslage eingenommen ist.

Durch das Andrücken des Kopplungselementes 40 über die Feder 14 sind in der Nullpunktlage beide Kopplungsbereiche 41a, 41b im Eingriff mit der Innenverzahnung 31, so daß kein Leerweg bis zum Eingreifen der Verzahnungen zurückgelegt werden muß. Die Feder 14 bewirkt weiterhin, daß trotz einer Bewegung des Antriebshebels 10 ohne Verstellung tatsächliche Verstellung des Antriebsrades 30, der Nutzer nicht das Gefühl eines Leerweges hat, da er beim Betätigen des Antriebshebels 10 gegen den Widerstand der Feder 14 arbeitet.

Eine entsprechende, gehäusefeste Kulissenführung, in der Führungselemente 51a, 51b dergestalt geführt werden, daß die Kopplungsbereiche 41a, 41b bei der Rückstellbewegung des Antriebshebels 10 in die Nullpunktlage nicht mit der Innenverzahnung 31 in Eingriff stehen, ist in der Figur 1 aus Gründen der Übersichtlichkeit nicht dargestellt. Das Prinzip der Kulissenführung wird in den nachfolgenden Figuren erläutert.

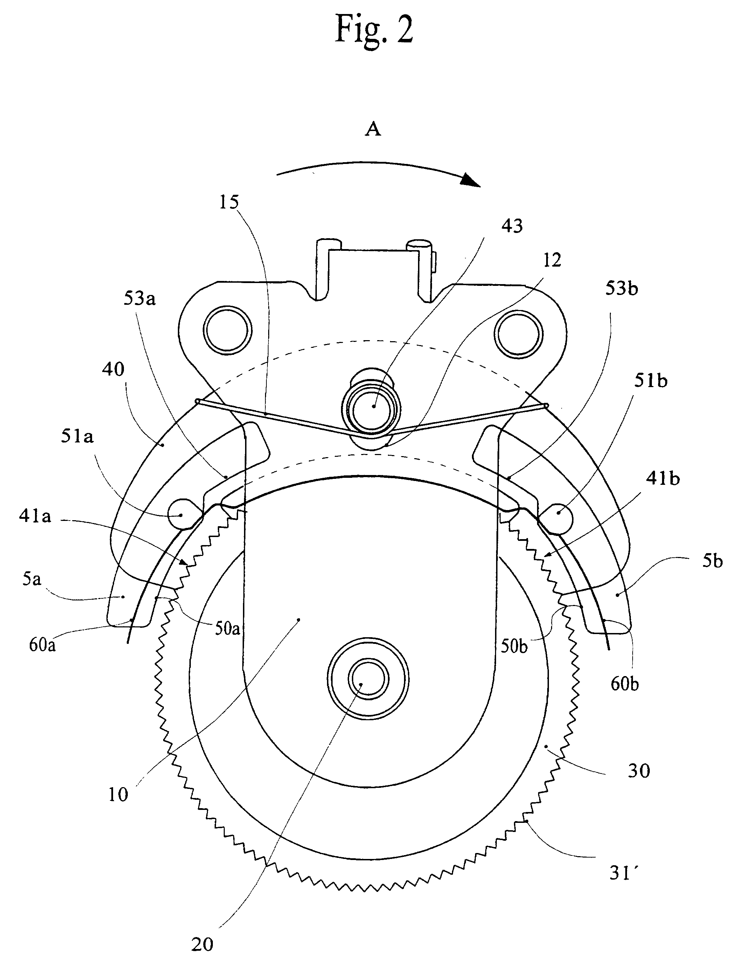

In der Figur 2 ist ein Verstellantrieb gezeigt, dessen Antriebshebel 10 ebenfalls drehbar um eine Achse 20 gelagert ist und ein Führungselement 43 aufweist, das in einer sich radial erstreckenden Ausnehmung 12 des Kopplungselementes 40 gelagert ist. Das Antriebsrad 30 ist mit einer Außenverzahnung 31' versehen, in die die entsprechenden Kopplungsbereiche 41a, 41b des Kopplungselements 40 eingreifen. Eine Feder 15 ist zwischen dem Kopplungselement 40 und dem am Antriebshebel 10 angeordneten Führungselement 43 angebracht und belastet das Kopplungselement 40 in Richtung des Antriebsrades 30, so daß beide Kopplungsbereiche 41a, 41b in der Ausgangsstellung mit der Aussenverzahnung 31' in Eingriff stehen.

An dem Kopplungselement 40 sind zwei Führungselemente 51a, 51b befestigt, die in je einer Kulissenführung 5a, 5b mit Kulissenführungsbereichen 50a, 53a bzw. 50b, 53b geführt sind. Ebenfalls ist jedem Führungselement 51a, 51b ein Federelement 60a bzw. 60b zugeordnet, wobei in der dargestellten Ausgestaltung die Federelemente 60a, 60b als eine einteilige Blattfeder ausgebildet sind. Die Federelemente 60a, 60b wirken der Feder 15 entgegen, daß heißt sie drücken den bei der Rückführung des Antriebshebels 10 unbelasteten Bereich des Kopplungselements 40 von der Aussenverzahnung 31' weg. Jedoch sind die Federelemente 60a, 60b dergestalt ausgelegt bzw. angeordnet, daß in der Nullpunktlage des Antriebshebels 10 keine Kraft auf die Führungselemente 51a, 51b ausgeübt wird, bzw. daß die Kraft geringer als die der Feder 15 ist, so daß das Kopplungselement 40 in der Nullpunktlage an der Aussenverzahnung 31' anliegt. Dagegen ist die auf die Führungselemente 51a, 51b außerhalb der Nullpunktlage von den Federn 60a, 60b ausgeübte Kraft geringer als die von der Feder 15 ausgehende Kraft, so daß der jeweils nichtbelastete Kopplungsbereich 41a, 41b abhebt.

Wird der Antriebshebel 10 in Richtung des Pfeiles A betätigt, wird eine Kraft über das Führungselement 43 auf das Kopplungselement 40 ausgeübt. Der Übergangsbereich zwischen den Kulissenführungsbereichen 50a, 53a bzw. 50b, 53b bewirkt eine Kippbewegung des Kopplungselementes 40 um den Kopplungsbereich 41b, so daß das Kopplungselement 40 entgegen der Kraft der Feder 15 entlang der Ausnehmung 12 nach außen verschoben wird, wobei der Kopplungsbereich 41b mit der Aussenverzahnung 31' in Eingriff bleibt. Gleichzeitig wird das Antriebsrad 30 durch die Drehbewegung des Kopplungselementes 40 um die Achse 20 entsprechend angetrieben und das Führungselement 51b wird in der Kulisse 5b mit Abstand zu der Kontur des Kulissenführungsbereiches 50b bewegt. Durch die auf den Antriebshebel 10 ausgeübte Kraft wird dabei das Federelement 60b radial nach innen gedrückt.

Sobald keine Kraft mehr über den Antriebshebel 10 in Richtung des Pfeiles A eingeleitet wird, drückt das Federelement 60b das Führungselement 51b radial nach außen. Der Freiraum über dem Kulissenführungsbereich 50b erlaubt ein Abheben des Kopplungsbereiches 41b von der Aussenverzahnung 31'. Durch die Kraft des Federelementes 60b wird das Kopplungselement 40 um das auf dem Bereich 53a befindliche Führungselement 51a gedreht, bis die Ausnehmung 12 an das Führungselement 43 anschlägt. Bei der Rückstellbewegung des Antriebshebels sind daher beide Kopplungsbereiche 41a, 41b nicht in Eingriff mit der Aussenverzahnung 31', nämlich der Kopplungsbereich 41b aufgrund der Federkraft des Federelementes 60b und der Kopplungsbereich 41a aufgrund des Kulissenführungsbereiches 53a, der von der Aussenverzahnung 31' beabstandet ist. Die Rückstellbewegung erfolgt daher ohne ein Ratschengeräusch.

Befindet sich der Antriebshebel 10 in seiner Nullpunktlage, so drückt die Feder 15 das Kopplungselement 40 wieder in Richtung der Achse 20 und bringt die Kopplungsbereiche 41a, 41b in Eingriff mit der Aussenverzahnung 31'.

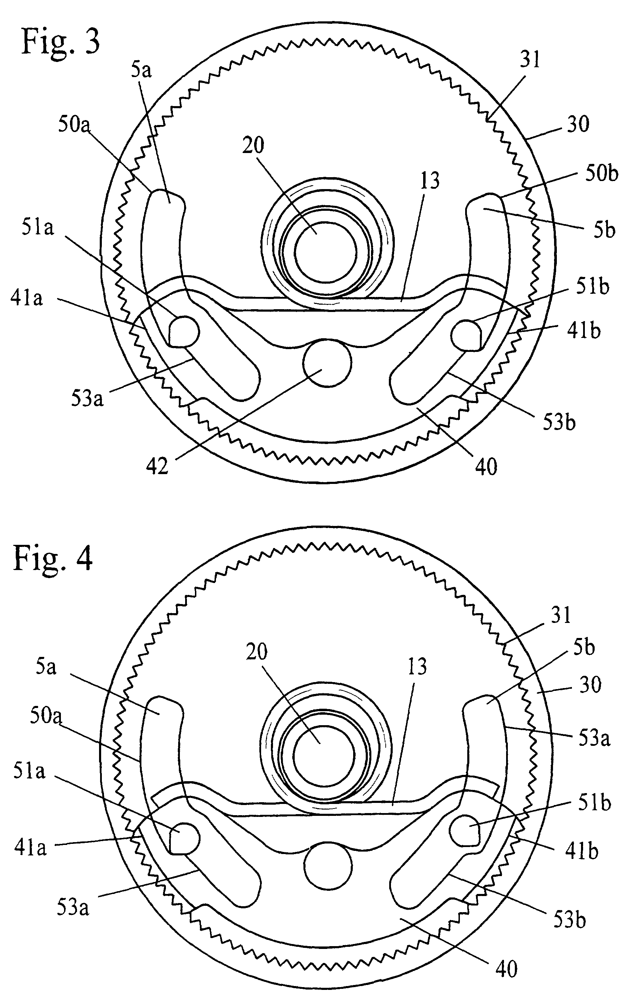

In der Figur 3 ist ein Verstellantrieb mit einem innenverzahnten Antriebsrad 30 dargestellt, wobei je eine gehäusefeste Kulissenführung 5a, 5b analog zu Figur 2 in Eingriff mit an dem Kopplungselement 40 angeordneten Führungselementen 51a, 51b steht. Die Feder 13, die hier an der Achse 20 des Antriebs gelagert ist, drückt das Kopplungselement 40 radial nach außen in Richtung der Innenverzahnung 31 des Antriebsrades 30. Die Feder 13 wirkt damit entsprechend der Feder 11 in der Figur 1. Eine Bewegung des nicht dargestellten Antriebshebels entgegen dem Uhrzeigersinn bewirkt eine entsprechende Bewegung des Kopplungselementes 40 und des Antriebsrades 30, wie sie in Figur 4 gezeigt ist.

Dabei ist das Kopplungselement 40 leicht um die Achse 20 gedreht und das Führungselement 51a ist entlang der Schulter zwischen dem Kulissenführungsbereich 50a und dem Kulissenführungsbereich 53a verschoben worden. Der Kopplungsbereich 41a hat sich gerade von der Innenverzahnung 31 des Antriebsrades 30 gegen die nach außen wirkende Kraft der Feder 13 aufgrund der geometrischen Abmessungen der Kulissenführung 5a abgehoben. Der Kopplungsbereich 41b steht dagegen in Eingriff mit der Innenverzahnung 31 und treibt das Antriebsrad 30 an.

Das Kopplungselement 40 weist ein Führungselement 42 auf, das entsprechend der Anordnung in der Figur 1 in einer nicht dargestellten Ausnehmung geführt ist, durch die die Drehbewegung um den Kopplungsbereich 41a begrenzt wird.

Bei der Rückstellbewegung des Antriebshebels in die Nullpunktlage bleibt der Kopplungsbereich 41b in Eingriff mit der Innenverzahnung 31. Da jedoch nur noch die Kraft durch die Feder 13 das Kopplungselement 40 radial nach außen drückt, gleitet der Kopplungsbereich 41b auf der Innenverzahnung 31 entlang, so daß ein Ratschengeräusch entsteht. Der bei der Verstellung entlastete Kopplungsbereich 41a bleibt wegen der Kulissenführung 5a außer Eingriff mit der Innenverzahnung 31. Erst bei bzw. kurz vor Erreichen der Nullpunktlage wandert das Führungselement 51a von dem Bereich 53a in Richtung der Innenverzahnung 31 und tritt mit dieser in Eingriff.

Es ist selbstverständlich möglich, die Führungselemente 51a, 51b gehäusefest auszubilden und an dem Kopplungselement 40 eine Kulissenführung vorzusehen.

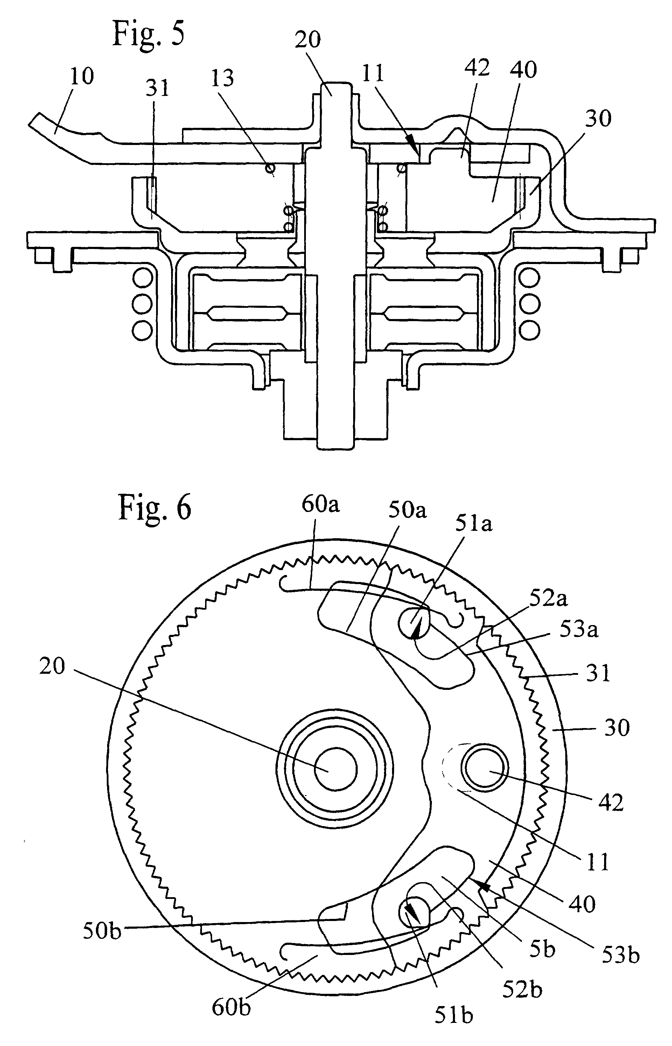

In Figur 5 ist eine Schnittdarstellung der Figur 3 dargestellt, bei der die Anordnung des Antriebshebels 10 oberhalb der Feder 13 und des Kopplungselementes 40 zu sehen ist. In dem Antriebshebel 10 ist die Ausnehmung 11 eingestanzt oder eingefräst, in der das Führungselement 42, das einstückig mit dem Kopplungselement 40 ausgebildet ist, geführt wird. Die Ausnehmung 11 bewirkt im Zusammenspiel mit der Feder 13 eine radial nach außen gerichtete Bewegung des Kopplungselementes 40 und damit ein Anliegen der Kopplungsbereiche an der Innenverzahnung 31 in der Nullpunktstellung.

Eine Variante der Erfindung, bei der ebenfalls kein Ratschengeräusch bei der Rückstellbewegung des Antriebshebels 10 auftritt, ist in Figur 6 gezeigt. Das Arbeitsprinzip entspricht dabei dem des in Figur 2 dargestellten Antriebs, wobei die Bezugsziffern denen der Figur 2 entsprechen und die betreffenden Elmente dieselbe Funktion wie im Zusammenhang mit Figur 2 beschrieben haben. Im unterschied zum Antrieb gemäß Figur 2 befindet sich gemäß Figur 6 das Kopplungselement 40 jedoch wie beim Antrieb gemnäß Figur 1 innerhalb des Antriebsrades 30. An dem Kopplungselement 40 sind Führungselemente 51a, 51b angeformt, die in eine Kulissenführung 5a, 5b eingreifen.

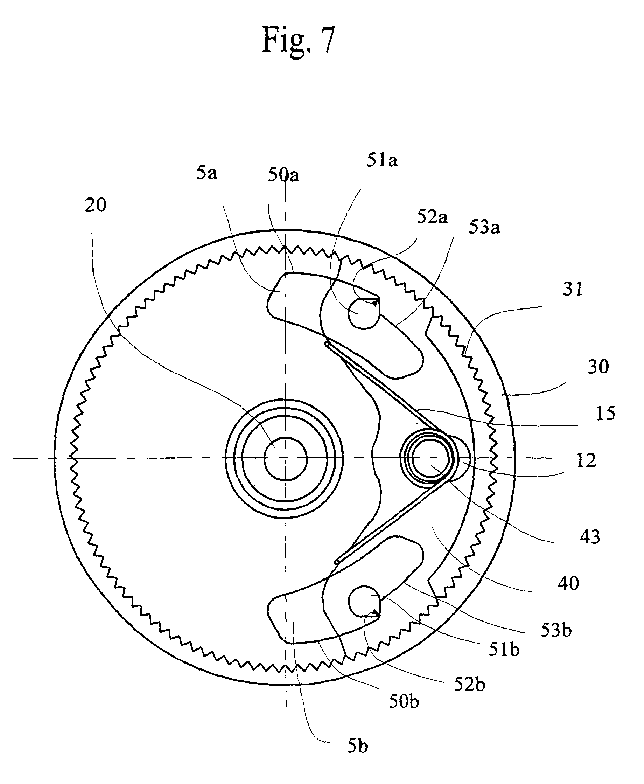

In Figur 7 weist das Kopplungselement 40 eine Ausnehmung 12 auf und die Feder 15 ist an dem Führungselement 43 gelagert, das an dem Antriebshebel ausgebildet ist. Die Feder 15 bewirkt ein ständiges Anliegen des Kopplungselementes 40 an der Innenverzahnung 31, sofern das Kopplungselement 40 sich in der Nullpunktlage befindet. Eine Verlagerung aus der Nullpunktlage führt zu einem Abheben eines Kopplungsbereiches 41a, 41b von der Innenverzahnung 31. Bei einer Rückstellbewegung in die Nullpunktlage gleitet der bei der Verstellung belastete Kopplungsbereich 41a, 41b auf der Innenverzahnung 31 entlang, bis die in der Figur 7 dargestellte Ausgangsposition erreicht ist.

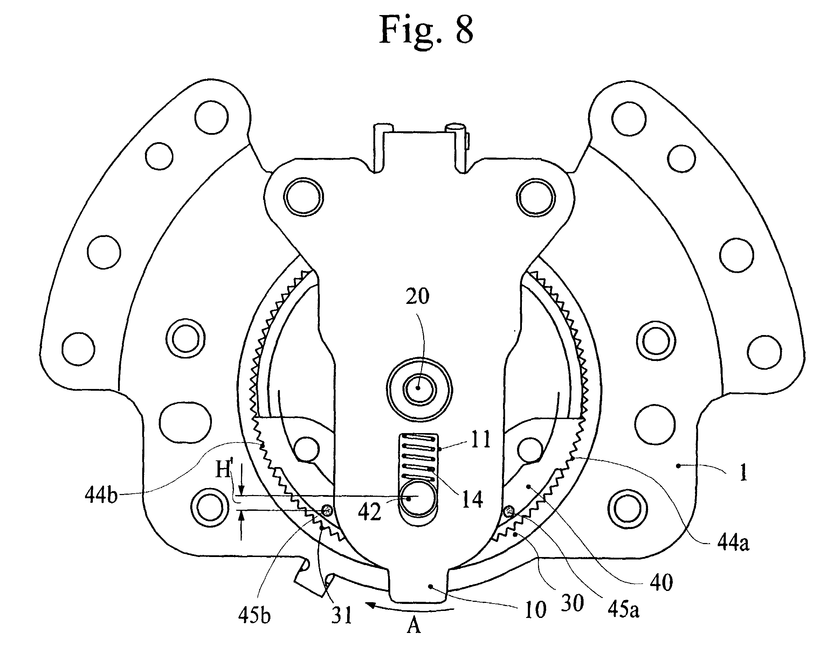

Figur 8 zeigt eine Draufsicht auf einen Verstellantrieb, der dem Verstellantrieb gemäß Figur 1 entspricht, wobei gleiche Bezugszeichen gleiche Funktionselemente des Verstellantriebs gemäß Figur 1 bezeichnen.

Im Unterschied zur Ausbildung des Verstellantriebs gemäß Figur 1 sind bei dem in Figur 8 dargestellten Verstellantrieb jedoch beide Kopplungsbereiche 41a, 41b des Kopplungselements 40 mit Reibelementen 45a, 45b versehen, die zu beiden Seiten des Antriebshebels 10 angeordnet sind. Die Reibelemente 45a, 45b können an den Kopplungsbereichen 41a, 41b befestigt sein bzw. einteilig am Kopplungsbereich 41a, 41b ausgebildet sein und befinden sich unterhalb der Wirkungslinie des den Drehpunkt des Kopplungselements 40 bildenden Führungselements 42 und des Zahneingriffs der Verzahnungsabschnitte 44a, 44b der Kopplungsbereiche 41a, 41b mit der Innenverzahnung 31 des Antriebsrades 30, so daß ein Hebelarm H ausgebildet wird, der bei der Bewegung des Antriebshebels 10 aus der Nullpunktlage heraus bzw. bei der Bewegung des Antriebshebels 10 in die Nullpunktlage ein entsprechendes Drehmoment bewirkt, das auf den betreffenden Kopplungsbereich 41a, 41b des Kopplungselements 40 bewirkt.

Die Reibelemente 45a, 45b stützen sich an einem ortsfesten Teil des Verstellantriebs, beispielsweise an dem Gehäuse des Verstellantriebs ab, so daß eine axiale Verspannung des Kopplungselements 40 bewirkt wird und bei einer Bewegung des Antriebshebels 10 aus der Nullpunktlage heraus auf der aktiven Seite des Kopplungselements 40, das heißt auf der Seite, die der Drehrichtung des Antriebshebels 10 entspricht, ein Drehmoment in Richtung eines Zahneingriffs des betreffenden Kopplungsbereichs 41a bzw. 41b in die Innenverzahnung 31 des Antriebsrades 3 wirkt, während beim Rückstellen des Antriebshebels 10 in die Nullpunktlage ein Drehmoment auf diesen Kopplungsbereich 41a, 41b bzw. des ihm zugeordneten Verzahnungsabschnittes 44a, 44b in Richtung auf ein Herausheben des betreffenden Verzahnungsabschnitts 44a, 44b aus der Innenverzahnung 31 des Antriebsrades 30 entsteht.

Bei einer Bewegung des Antriebshebels 10 in Richtung des Pfeiles A wird durch die Wirkung des axial verspannten Reibelementes 45b der Verzahnungsabschnitt 44b des Kopplungsbereichs 41b in die Innenverzahnung 31 des Antriebsrades 30 hineingedrückt, während bei der Rückstellung des Antriebshebels 10 in die Nullpunktlage entgegen der Pfeilrichtung A das durch das Reibelement 45b bewirkte Drehmoment zu einem Herausheben des Verzahnungsabschnittes 44b aus der Innenverzahnung 31 des Antriebsrades 30 führt. Das Herausheben des Verzahnungsabschnittes 44a aus der Innenverzahnung 31 des Antriebsrades 30 erfolgt bei der vorstehend beschriebenen Bewegung des Antriebshebels 10 in Richtung des Pfeiles A aus der Nullpunktlage heraus bzw. bei der Bewegung des Antriebshebels 10 in Richtung der Nullpunktlage analog zur Erläuterung des Verstellantriebs gemäß Figur 1.

In der Nullpunktlage des Antriebshebels 10 sind die Reibelemente 45a, 45b inaktiv, das heißt sie sind nicht axial verspannt, so daß die Feder 14 das Kopplungselement 40 radial nach außen drücken kann und damit in der Nullpunktlage des Antriebshebels 10 beide Kopplungsbereiche 41a und 41b des Kopplungselements 40 im Eingriff mit der Innenverzahnung 31 des Antriebsrades 30 stehen.

Die Anordnung der Reibelemente 45a, 45b bewirkt zum einen einen spielfreien Verstellantrieb, der bei der Rückstellung des Antriebshebels 10 in die Nullpunktlage keine Ratschengeräusche entstehen lässt und zum anderen eine Fixierung des Kopplungselements 40, so daß aufgrund des erforderlichen axialen Spiels keine Klappergeräusche entstehen können.

Die Reibelemente 45a, 45b sind vorzugsweise als Blattfedern ausgebildet, die einerseits an den Kopplungsbereichen 41a bzw. 41b und andererseits beispielsweise am Gehäuse des Verstellantriebs abgestützt sind.

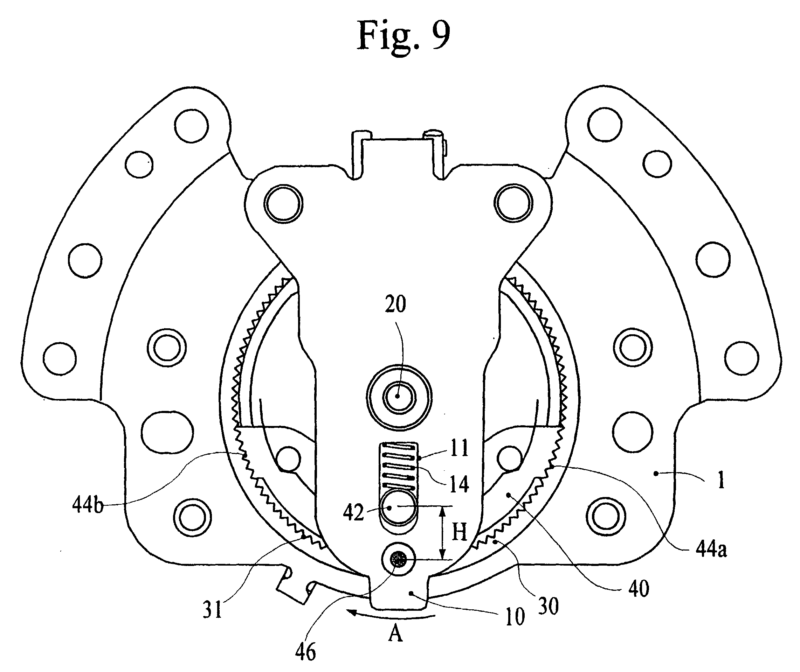

Figur 9 zeigt eine Alternative zu der Anordnung gemäß Figur 8 mit einem mittig an dem Kopplungselement 40 angebrachten Reibelement 46, das durch eine Öffnung 16 im Antriebshebel 10 greift und ebenfalls an einem ortsfesten Teil des Verstellantriebs, vorzugsweise am Gehäuse des Verstellantriebs abgestützt ist.

Die Wirkung dieses einen zentralen Reibelements 46 entspricht der Wirkung der beiden seitlich des Antriebshebels 10 auf dem Kopplungselement 40 angeordneten Reibelementen 45a, 45b gemäß Figur 8 und ist ebenfalls unterhalb der Wirkungslinie des durch das Führungselement 42 gebildeten Drehpunktes des Kopplungselementes 40 und dem Zahneingriff der Verzahnungsabschnitte 44a, 44b der Kopplungsbereiche 41a, 41b mit der Innenverzahnung 31 angeordnet. Der in dieser Ausführungsform gegenüber der Ausführungsform gemäß Figur 8 größere Abstand H' zwischen dem Reibelement 46 und dem Führungselement 42 bildet den Hebelarm für das Drehmoment zum Abheben des Kopplungsbereichs 41a bzw. 41b zur Verstärkung des Zahneingriffs des jeweils aktiven Kopplungsbereichs 41a, 41b bzw. zum Herausheben des betreffenden Verzahnungsbereiches 44a, 44b aus der Innenverzahnung 31 beim Zurückführen des Hebelarms 10 in die Nullpunktlage.

Als weitere Alternative ist eine Kombination der Ausführungsformen gemäß den Figuren 8 und 9 möglich, das heißt die Anordnung von drei Reibelementen 45a, 45b und 46, von denen zwei mit dem Kopplungselement 40 verbundene Reibelemente seitlich des Antriebshebels 10 angeordnet sind, während ein zentrales Reibelement entsprechend dem Reibelement 46 gemäß Figur 9 auf dem Kopplungselement 40 vorgesehen ist. Sämtliche Reibelemente 45a, 45b, 46 sind außerhalb der Nullpunktlage des Antriebshebels 10 axial verspannt, während in der Nullpunktlage die Reibelemente 45a, 45b und 46 inaktiv sind, so daß die Feder 14 das Führungselement 42 nach außen drückt, das heißt beide Verzahnungsabschnitte 44a, 44b der Kopplungsbereiche 41a, 41b in die Innenverzahnung 31 des Antriebsrades 30 drückt.

Auch das zentrale Reibelement 46 gemäß Figur 9 besteht vorzugsweise aus einer Blattfeder, die am Kopplungselement 40 befestigt ist, durch die Öffnung 16 des Antriebshebels 10 greift und an einem ortsfesten Element des Verstellantriebs abgestützt ist.

### Bezugszeichenliste:

- 1 -: Gehäuse
- 5a, 5b -: Kulissenführung
- 10 -: Antriebshebel
- 11 -: Ausnehmung
- 12 -: Ausnehmung
- 13 -: Feder
- 14 -: Feder
- 15 -: Feder
- 16 -: Öffnung
- 20 -: Achse
- 30 -: Antriebsrad
- 31 -: Innenverzahnung
- 31' -: Außenverzahnung
- 40 -: Kopplungselement
- 41a, 41b -: Kopplungsbereich
- 42 -: Führungselement
- 43 -: Führungselement
- 45a, 45b -: Reibelemente
- 46 -: Reibelement
- 44a, 44b -: Verzahnungsabschnitt
- 50a, 50b -: Kulissenführungsbereich
- 51a, 51b -: Führungselement
- 52a, 52b -: Eckabschnitt
- 53a, 53b -: Kulissenführungsbereich
- 60a, 60b -: Federelement
- A -: Betätigungsrichtung

## Patentansprüche

1. Beidseitig wirkender Antrieb für Verstellvorrichtungen, insbesondere für Fahrzeugsitze, mit
- einem schwenkbar gelagerten Antriebshebel (10) zur Erzeugung einer Drehbewegung, die ausgehend von einer Nullpunktlage des Antriebshebels (10) wahlweise in die eine oder andere Drehrichtung erfolgen kann,
- einem Antriebsrad (30), das bei einer Bewegung des Antriebshebels (10) aus der Nullpunktlage gedreht wird,
- mindestens einem am Antriebshebel (10) angeordneten Kopplungselement (40), das zwei Kopplungsbereiche (41a, 41b) zur Übertragung eines Drehmoments auf das Antriebsrad (30) aufweist und
- einer Kulissenführung (5a, 5b) mit Kulissenführungsbereichen (50a, 50b; 53a, 53b) zur Steuerung des Kopplungselements, wobei
- das Kopplungselement (40) kippbar gelagert ist, so daß bei einer Bewegung des Antriebshebels (10) aus der Nullpunktlage der unbelastete Kopplungsbereich (41a, 41b) durch die Kulissenführung (5a, 5b) von dem Antriebsrad (30) entkoppelt wird und bei einer Bewegung des Antriebshebels (10) in Richtung der Nullpunktlage entkoppelt bleibt,
**dadurch gekennzeichnet,**
**daß** das Kopplungselement (40) in einer Führung (11, 12) radial verschiebbar und mit den beiden Kopplungsbereichen (41a, 41b) in der Nullpunktlage des Antriebshebels (10) mit dem Antriebsrad (30) federelastisch gekoppelt ist.

2. Antrieb nach Anspruch 1, **dadurch gekennzeichnet, daß** das Kopplungselement (40) mit einem Führungselement (42) verbunden ist, das in eine sich in radialer Richtung erstreckende Ausnehmung (11) des Antriebshebels (10) eingreift.

3. Antrieb nach Anspruch 1, **dadurch gekennzeichnet, daß** der Antriebshebel (10) mit einem Führungselement (43) verbunden ist, das in eine sich in radialer Richtung erstreckende Ausnehmung (12) des Kopplungselements (40) eingreift.

4. Antrieb nach den Ansprüchen 2 oder 3, **dadurch gekennzeichnet, daß** das Führungselement (42, 43) mit der sich in radialer Richtung erstreckenden Ausnehmung (11, 12) durch einen Gleitstein verbunden ist.

5. Antrieb nach den Ansprüchen 2 bis 4, **dadurch gekennzeichnet, daß** die Ausnehmung (11, 12) derart bemessen ist, daß das Kopplungselement (40) so weit radial bewegbar ist, daß beide Kopplungsbereiche (41a, 41b) gerade nicht mit dem Antriebsrad (30) gekoppelt sind.

6. Antrieb nach mindestens einem der Ansprüche 1 bis 5, **dadurch gekennzeichnet, daß** zwischen Gehäuse und Kopplungselement (40) eine Feder (13) angeordnet ist.

7. Antrieb nach mindestens einem der Ansprüche 1 bis 5, **dadurch gekennzeichnet, daß** zwischen dem Antriebshebel (10) und dem Kopplungselement eine Feder (14, 15) angeordnet ist.

8. Antrieb nach Anspruch 7, **dadurch gekennzeichnet, daß** die Feder (14) zwischen dem Antriebshebel (10) und dem Führungselement (42) angeordnet ist.

9. Antrieb nach Anspruch 7, **dadurch gekennzeichnet, daß** die Feder (15) zwischen dem Führungselement (43) und dem Kopplungselement (40) angeordnet ist.

10. Antrieb nach mindestens einem der vorangehenden Ansprüche, **dadurch gekennzeichnet, daß** die Kopplungsbereiche (41a, 41b) des Kopplungselements (40) als Verzahnungen (43a, 43b) ausgebildet sind, denen eine entsprechende Verzahnung (31, 31') am Umfang des Antriebsrades (30) zugeordnet ist.

11. Antrieb nach Anspruch 10, **dadurch gekennzeichnet, daß** die Verzahnung des Antriebsrades (30) als Innenverzahnung (31) oder Außenverzahnung (31') ausgebildet ist.

12. Antrieb nach mindestens einem der Ansprüche 1 bis 9, **dadurch gekennzeichnet, daß** die Kopplungsbereiche (41a, 41b) des Kopplungselements (40) und der Umfang des Antriebsrades (30) so ausgebildet sind, daß die Übertragung eines Drehmoments zwischen Kopplungselement (40) und Antriebsrad (30) reibschlüssig erfolgt.

13. Antrieb nach mindestens einem der vorangehenden Ansprüche, **dadurch gekennzeichnet, daß** die Kulissenführung (5a, 5b) in einem Abdeckelement des Antriebs ausgebildet ist.

14. Antrieb nach mindestens einem der vorangehenden Ansprüche, **dadurch gekennzeichnet, daß** beidseitig außerhalb der Kulissenführungsbereiche (53a, 53b) Federbereiche (60a, 60b) angeordnet sind, die auf das Kopplungselement (40) eine entgegen der Verriegelungsrichtung wirkende Kraft ausüben, wobei die Federkraft so bemessen ist, daß der bei einer Bewegung des Antriebshebels (10) aus der Nullpunktlage heraus belastete Kopplungsbereich (41a, 41b) nicht von dem Antriebsrad abgehoben wird, jedoch während der Bewegung zur Nullpunktlage hin abgehoben wird.

15. Antrieb nach mindestens einem der vorangehenden Ansprüche, **dadurch gekennzeichnet, daß** an dem Kopplungselement (40) Führungselemente (51a, 51b) angeordnet sind, die in der Kulissenführung (5a, 5b) geführt werden und die außerhalb der Kulissenführungsbereiche (53a, 53b) mit den Federbereichen (60a, 60b) in Kontakt stehen.

16. Antrieb nach Anspruch 15, **dadurch gekennzeichnet, daß** die Führungselemente (51a, 51b) einen nicht abgerundeten Eckabschnitt (52a, 52b) aufweisen.

17. Antrieb nach mindestens einem der vorangehenden Ansprüche, **dadurch gekennzeichnet, daß** auf das Kopplungselement (40) eine solche Zusatzkraft bei einem Verstellvorgang einwirkt, daß bei einer Bewegung des Antriebshebels (10) aus der Nullpunktlage heraus auf den belasteten Kopplungsbereich (41a bzw. 41b) ein Drehmoment in Richtung auf das Antriebsrad (30) und bei einer Bewegung des Antriebshebels (10) in Richtung der Nullpunktlage ein Drehmoment in Richtung auf ein Abheben des belasteten Kopplungsbereichs (41a bzw. 41b) von dem Antriebsrad (30) entsteht.

18. Antrieb nach Anspruch 17 mit als Verzahnungen (43a, 43b) ausgebildeten Kopplungsbereichen (41a, 41b) des Kopplungselements (40) und einer den Verzahnungen (43a, 43b) zugeordneten Verzahnung (31) am Umfang des Antriebsrades (30), **dadurch gekennzeichnet, daß** bei einer Bewegung des Antriebshebels (10) aus der Nullpunktlage heraus auf den belasteten Kopplungsbereich (41a, 41b) ein Drehmoment in Richtung auf einen Zahneingriff und bei einer Bewegung des Antriebshebels (10) in Richtung der Nullpunktlage ein Drehmoment in Richtung einer Trennung des Zahneingriffs entsteht.

19. Antrieb nach Anspruch 17 oder 18, **dadurch gekennzeichnet, daß** das Kopplungselement (40) in axialer Richtung verspannt ist.

20. Antrieb nach Anspruch 19, **dadurch gekennzeichnet, daß** das Kopplungselement (40) außerhalb der Nullpunktlage des Antriebshebels (10) in axialer Richtung verspannt ist.

21. Antrieb nach mindestens einem der voranstehenden Ansprüche 17 bis 20, **dadurch gekennzeichnet, daß** mindestens ein axial wirkendes Reibelement (45a, 45b; 46) am Kopplungselement (40) angeordnet ist, das in der Nullpunktlage des Antriebshebels (10) inaktiv ist, derart, daß die Kopplungsbereiche (41a, 41b) durch die federelastische Verbindung des Kopplungselements (40) und des Antriebshebels (10) mit dem Antriebsrad (30) gekoppelt werden.

22. Antrieb nach Anspruch 21, **dadurch gekennzeichnet, daß** zwei Reibelemente (45a, 45b) seitlich neben dem Antriebshebel (10) auf dem Kopplungselement (40) angeordnet sind.

23. Antrieb nach Anspruch 21, **dadurch gekennzeichnet, daß** ein Reibelement (46) mittig am Kopplungselement (40) angeordnet ist.

24. Antrieb nach Anspruch 23, **dadurch gekennzeichnet, daß** das mittig am Kopplungselement (40) angeordnete Reibelement (46) durch eine Öffnung (16) im Antriebshebel (10) greift.

25. Antrieb nach mindestens einem der vorangehenden Ansprüche 21 bis 23, **dadurch gekennzeichnet, daß** die Reibelemente (45a, 45b; 46) an einem ortsfesten Teil des Antriebs abgestützt sind.

26. Antrieb nach mindestens einem der vorangehenden Ansprüche 21 bis 25, **dadurch gekennzeichnet, daß** das bzw. die Reibelement(e) (45a, 45b; 46) unterhalb der Wirklinie des Drehpunkts des Kopplungselements (40) mit der Verbindung der Kopplungsbereiche (41a, 41b) mit dem Antriebsrad (30) am Kopplungselement (40) angeordnet ist (sind).

27. Antrieb nach mindestens einem der vorangehenden Ansprüche 21 bis 26, **dadurch gekennzeichnet, daß** das bzw. die Reibelement(e) (45a, 45b; 46) als Blattfeder ausgebildet ist (sind).

## Claims

1. Drive acting on both sides for adjustment devices, more particularly for vehicle seats, with
- a swivel mounted drive lever (10) for producing a rotary movement which starting from a zero point position of the drive lever (10) can take place selectively into one or other rotary direction,
- a drive wheel (30) which is rotated during movement of the drive lever (10) out from the zero point position
- at least one coupling element (40) mounted on the drive lever (10) and having two coupling areas (41a, 41b) for transferring torque to the drive wheel (30) and
- a sliding block guide (5a, 5b) with sliding block guide areas (50a, 50b; 53a, 53b) for controlling the coupling element; whereby
- the coupling element (40) is able to tilt so that during movement of the drive lever (10) out from the zero point position the non-loaded coupling area (41a, 41b) is uncoupled from the drive wheel (30) through the sliding block guide (5a, 5b) and during movement of the drive lever (10) in the direction of the zero point position remains uncoupled.
**characterised in that**
the coupling element (40) is mounted radially displaceable in a guide (11, 12) and is coupled spring elastically with the drive wheel through the two coupling areas (41a, 41b) in the zero point position of the drive lever (10)

2. Drive according to claim 1 **characterised in that** the coupling element (40) is connected to a guide element (42) which engages in a radially extending recess (11) of the drive lever (10).

3. Drive according to claim 1 **characterised in that** the drive lever (10) is connected to a guide element (43) which engages in a radially extending recess (12) of the coupling element (40).

4. Drive according to claims 2 or 3 **characterised in that** the guide element (42, 43) is connected to the radially extending recess (11, 12) through a slide block.

5. Drive according to claims 2 to 4 **characterised in that** the recess (11, 12) is measured so that the coupling element (40) is movable radially so far that the two coupling areas (41a, 41b) are not quite coupled to the drive wheel (30).

6. Drive according to at least one of claims 1 to 5 **characterised in that** a spring (13) is mounted between housing and coupling element (40).

7. Drive according to at least one of claims 1 to 5 **characterised in that** a spring (14, 15) is mounted between the drive lever (10) and the coupling element.

8. Drive according to claim 7 **characterised in that** the spring (14) is mounted between the drive lever (10) and the guide element (42).

9. Drive according to claim 7 **characterised in that** the spring (15) is mounted between the guide element (43) and the coupling element (40).

10. Drive according to at least one of the preceding claims **characterised in that** the coupling areas (41a, 41b) of the coupling element (40) are formed as teeth (43a, 43b) associated with a corresponding toothing (31, 31') on the circumference of the drive wheel (30).

11. Drive according to claim 10 **characterised in that** the teeth of the drive wheel (30) are formed as internal teeth (31) or external teeth (31').

12. Drive according to at least one of claims 1 to 9 **characterised in that** the coupling areas (41a, 41b) of the coupling element (40) and the circumference of the drive wheel (30) are designed so that the transfer of torque between the coupling element (40) and the drive wheel (30) takes place with friction engagement.

13. Drive according to at least one of the preceding claims **characterised in that** the sliding block guide (5a, 5b) is formed in a cover element of the drive.

14. Drive according to at least one of the preceding claims **characterised in that** spring areas (60a, 60b) are arranged on each side outside of the sliding block guide areas (53a, 53b) and exert on the coupling element (40) a force acting against the locking direction, with the spring force measured so that the coupling area (41a, 41b) which is loaded when the drive lever (10) moves out from the zero point position is not lifted from the drive wheel but is lifted during movement towards the zero point position.

15. Drive according to at least one of the preceding claims **characterised in that** on the coupling element (40) there are guide elements (51a, 51b) which are guided in the sliding block guide (5a, 5b) and which outside of the sliding block guide areas (53a, 53b) are in contact with the spring areas (60a, 60b).

16. Drive according to claim 15 **characterised in that** the guide elements (51a, 51b) have a non-rounded corner section (52a, 52b).

17. Drive according to at least one of the preceding claims **characterised in that** a secondary force acts on the coupling element (40) during an adjusting process so that when the drive lever (10) is moved out from the zero point position a torque is produced on the loaded coupling area (41a, 1b) in the direction of the drive wheel (30) and when the drive lever (10) is moved towards the zero point position a torque is produced in the sense of lifting the loaded coupling area (41a, 41b) away from the drive wheel (30).

18. Drive according to claim 17 with coupling areas (41a, 41b) of the coupling element (40) formed as teeth (43a, 43b) and with a toothed area (31) on the circumference of the drive wheel (30) associated with the teeth (43a, 43b), **characterised in that** when the drive lever (10) is moved out of the zero point position torque is produced on the loaded coupling area (41a, 41b) in the direction of a toothed engagement and when the drive lever (10) is moved towards the zero point position torque is produced in the sense of separating the toothed engagement.

19. Drive according to claim 17 or 18 **characterised in that** the coupling element (10) is axially tensioned.

20. Drive according to claim 19 **characterised in that** the coupling element (40) is tensioned in the axial direction outside of the zero point position of the drive lever (10).

21. Drive according to at least one of the preceding claims 17 to 20 **characterised in that** at least one axially acting friction element (45a, 45b; 46) is mounted on the coupling element (40) and is inactive in the zero point position of the drive lever (10) so that the coupling areas (41a, 41b) are coupled to the drive wheel through the spring-elastic connection between the coupling element (40) and drive lever (10).

22. Drive according to claim 21 **characterised in that** two friction elements (45a, 45b) are mounted on the coupling element (40) at the side next to the drive lever (10).

23. Drive according to claim 21 **characterised in that** a friction element (46) is mounted centrally on the coupling element (40).

24. Drive according to claim 23 **characterised in that** the friction element (46) mounted centrally on the coupling element (40) engages through an opening (16) in the drive lever (10).

25. Drive according to at least one of the preceding claims 21 to 23 **characterised in that** the friction elements (45a, 45b; 46) are supported on a locally fixed part of the drive.

26. Drive according to at least one of the preceding claims 21 to 25 **characterised in that** the or each friction element (5a, 45b; 46) is mounted on the coupling element underneath the active line of the rotary point of the coupling element (40) with the connection of the coupling areas (41a, 41b) with the drive wheel (30).

27. Drive according to at least one of the preceding claims 21 to 26 **characterised in that** the or each friction element (45a, 45b; 46) is formed as a leaf spring.

## Revendications

1. Organe d'entraînement agissant sur deux côtés, destiné à des dispositifs de réglage notamment affectés à des sièges de véhicules, comprenant
- un levier d'entraînement (10) monté pivotant, pour engendrer un mouvement rotatoire pouvant sélectivement s'opérer dans l'une ou l'autre des directions de rotation à partir d'une position zéro dudit levier d'entraînement (10),
- une roue d'entraînement (30) à laquelle une rotation est imprimée lors d'un mouvement du levier d'entraînement (10) à partir de la position zéro,
- au moins un élément d'accouplement (40) situé sur le levier d'entraînement (10) et présentant deux zones d'accouplement (41a, 41b) pour répercuter un couple de rotation sur la roue d'entraînement (30), et
- un guide coulissant (5a, 5b) muni de régions (50a, 50b ; 53a, 53b) de guidage coulissant, destinées à la commande de l'élément d'accouplement, sachant que
- ledit élément d'accouplement (40) est monté basculant de façon telle que, lors d'un mouvement du levier d'entraînement (10) à partir de la position zéro, la zone d'accouplement (41a, 41b) non contrainte soit désaccouplée d'avec la roue d'entraînement (30), par le guide coulissant (5a, 5b), et demeure désaccouplée lors d'un mouvement dudit levier d'entraînement (10) en direction de la position zéro,
**caractérisé par le fait**
**que** l'élément d'accouplement (40) peut coulisser radialement dans un guide (11, 12) et est accouplé élastiquement à la roue d'entraînement (30), par les deux zones d'accouplement (41a, 41b), dans la position zéro du levier d'entraînement (10).

2. Organe d'entraînement selon la revendication 1, **caractérisé par le fait que** l'élément d'accouplement (40) est relié à un élément de guidage (42) pénétrant dans un évidement (11) du levier d'entraînement (10), qui s'étend dans une direction radiale.

3. Organe d'entraînement selon la revendication 1, **caractérisé par le fait que** le levier d'entraînement (10) est relié à un élément de guidage (43) pénétrant dans un évidement (12) de l'élément d'accouplement (40), qui s'étend dans une direction radiale.

4. Organe d'entraînement selon les revendications 2 ou 3, **caractérisé par le fait que** l'élément de guidage (42, 43) est relié, par l'intermédiaire d'un patin coulissant, à l'évidement (11, 12) s'étendant dans une direction radiale.

5. Organe d'entraînement selon les revendications 2 à 4, **caractérisé par le fait que** l'évidement (11, 12) est dimensionné de manière que l'élément d'accouplement (40) puisse accomplir un mouvement radial d'une course telle que les deux zones d'accouplement (41a, 41b) ne soient précisément pas accouplées à la roue d'entraînement (30).

6. Organe d'entraînement selon au moins l'une des revendications 1 à 5, **caractérisé par le fait qu'**un ressort (13) est interposé entre le carter et l'élément d'accouplement (40).

7. Organe d'entraînement selon au moins l'une des revendications 1 à 5, **caractérisé par le fait qu'**un ressort (14, 15) est interposé entre le levier d'entraînement (10) et l'élément d'accouplement.

8. Organe d'entraînement selon la revendication 7, **caractérisé par le fait que** le ressort (14) est interposé entre le levier d'entraînement (10) et l'élément de guidage (42).

9. Organe d'entraînement selon la revendication 7, **caractérisé par le fait que** le ressort (15) est interposé entre l'élément de guidage (43) et l'élément d'accouplement (40).

10. Organe d'entraînement selon au moins l'une des revendications précédentes, **caractérisé par le fait que** les zones d'accouplement (41a, 41b) de l'élément d'accouplement (40) sont réalisées sous la forme de dentures (43a, 43b) auxquelles est associée une denture correspondante (31, 31'), située sur le pourtour de la roue d'entraînement (30).

11. Organe d'entraînement selon la revendication 10, **caractérisé par le fait que** la denture de la roue d'entraînement (30) est réalisée sous la forme d'une denture intérieure (31) ou d'une denture extérieure (31').

12. Organe d'entraînement selon au moins l'une des revendications 1 à 9, **caractérisé par le fait que** les zones d'accouplement (41a, 41b) de l'élément d'accouplement (40), et le pourtour de la roue d'entraînement (30), sont d'une réalisation telle que la transmission d'un couple de rotation, entre ledit élément d'accouplement (40) et ladite roue d'entraînement (30), s'opère par frottement.

13. Organe d'entraînement selon au moins l'une des revendications précédentes, **caractérisé par le fait que** le guide coulissant (5a, 5b) est ménagé dans un élément de recouvrement dudit organe d'entraînement.

14. Organe d'entraînement selon au moins l'une des revendications précédentes, **caractérisé par** la présence, de part et d'autre et à l'extérieur des régions (53a, 53b) de guidage coulissant, de régions élastiques (60a, 60b) appliquant, à l'élément d'accouplement (40), une force agissant à l'opposé de la direction de verrouillage, sachant que la force élastique est calculée de façon telle que la zone d'accouplement (41a, 41b), contrainte lors d'un mouvement du levier d'entraînement (10) lui faisant quitter la position zéro, ne soit pas soulevée à l'écart de la roue d'entraînement, mais soit cependant soulevée au cours du mouvement vers ladite position zéro.

15. Organe d'entraînement selon au moins l'une des revendications précédentes, **caractérisé par** la présence, sur l'élément d'accouplement (40), d'éléments de guidage (51a, 51b) qui sont guidés dans le guide coulissant (5a, 5b), et sont en contact avec les régions élastiques (60a, 60b) à l'extérieur des régions (53a, 53b) de guidage coulissant.

16. Organe d'entraînement selon la revendication 15, **caractérisé par le fait que** les éléments de guidage (51a, 51b) présentent un segment anguleux (52a, 52b) non arrondi.

17. Organe d'entraînement selon au moins l'une des revendications précédentes, **caractérisé par le fait que** l'élément d'accouplement (40) est soumis, au cours d'un processus de réglage, à une force additionnelle telle que, lors d'un mouvement du levier d'entraînement (10) lui faisant quitter la position zéro, un couple de rotation en direction de la roue d'entraînement (30) soit imposé à la zone d'accouplement (41a, respectivement 41b) contrainte ; et que, lors d'un mouvement dudit levier d'entraînement (10) en direction de la position zéro, un couple de rotation soit imposé dans le sens d'un soulèvement de ladite zone d'accouplement (41a, respectivement 41b) contrainte, à l'écart de ladite roue d'entraînement (30).

18. Organe d'entraînement selon la revendication 17, dans lequel des zones d'accouplement (41a, 41b) de l'élément d'accouplement (40) sont réalisées sous la forme de dentures (43a, 43b) et une denture (31), située sur le pourtour de la roue d'entraînement (30), est associée auxdites dentures (43a, 43b), **caractérisé par le fait que**, lors d'un mouvement du levier d'entraînement (10) lui faisant quitter la position zéro, la zone d'accouplement (41a, 41b) contrainte subit un couple de rotation dans le sens d'une venue en prise par engrènement ; et, lors d'un mouvement dudit levier d'entraînement (10) en direction de la position zéro, ladite zone subit un couple de rotation dans le sens d'une suppression de la prise d'engrènement.

19. Organe d'entraînement selon la revendication 17 ou 18, **caractérisé par le fait que** l'élément d'accouplement (40) est soumis à une tension dans le sens axial.

20. Organe d'entraînement selon la revendication 19, **caractérisé par le fait que** l'élément d'accouplement (40) est soumis à une tension, dans le sens axial, à l'extérieur de la position zéro du levier d'entraînement (10).

21. Organe d'entraînement selon au moins l'une des revendications précédentes 17 à 20, **caractérisé par** la présence, sur l'élément d'accouplement (40), d'au moins un élément de frottement (45a, 45b ; 46) qui agit axialement et est inopérant dans la position zéro du levier d'entraînement (10), de façon telle que les zones d'accouplement (41a, 41b) soient accouplées à la roue d'entraînement (30) par la liaison élastique entre ledit élément d'accouplement (40) et ledit levier d'entraînement (10).

22. Organe d'entraînement selon la revendication 21, **caractérisé par le fait que** deux éléments de frottement (45a, 45b) jouxtent latéralement le levier d'entraînement (10) sur l'élément d'accouplement (40).

23. Organe d'entraînement selon la revendication 21, **caractérisé par le fait qu'**un élément de frottement (46) est disposé au centre de l'élément d'accouplement (40).

24. Organe d'entraînement selon la revendication 23, **caractérisé par le fait que** l'élément de frottement (46), disposé au centre de l'élément d'accouplement (40), traverse un orifice (16) pratiqué dans le levier d'entraînement (10).

25. Organe d'entraînement selon au moins l'une des revendications précédentes 21 à 23, **caractérisé par le fait que** les éléments de frottement (45a, 45b ; 46) prennent appui contre une partie fixe dudit organe d'entraînement.

26. Organe d'entraînement selon au moins l'une des revendications précédentes 21 à 25, **caractérisé par le fait que** le ou les élément(s) de frottement (45a, 45b ; 46) est (sont) disposé(s), sur l'élément d'accouplement (40), au-dessous de la ligne d'action du point de rotation dudit élément d'accouplement (40) avec la liaison entre les zones d'accouplement (41a, 41b) et la roue d'entraînement (30).

27. Organe d'entraînement selon au moins l'une des revendications précédentes 21 à 26, **caractérisé par le fait que** le ou les élément(s) de frottement (45a, 45b ; 46) est (sont) réalisé(s) en tant que lame(s) de ressort.
